# EUROPÄISCHE PATENTSCHRIFT

(11) **EP 0 622 647 B1**
(45) Veröffentlichungstag und Bekanntmachung des Hinweises auf die Patenterteilung: **08.11.2006**
(21) Anmeldenummer: 94109950.9
(22) Anmeldetag: 12.09.1992
(51) Int. Cl.: G02B 6/12

(54) **Optischer Wellenleiter mit einem im wesentlichen planaren Substrat und Verwendung desselben**
Optical waveguide having an essentially planar substrate and its application
Guide d'onde optique à substrat plan et son utilisation

(30) Priorität: 18.09.1991 DE 4130985; 24.04.1992 DE 4213454; 29.08.1992 DE 4228853
(43) Veröffentlichungstag der Anmeldung: 02.11.1994
(62) Teilanmeldung aus: 92115622.0
(73) Patentinhaber: Schott AG, 55122 Mainz (DE)
(72) Erfinder: Heming, Martin, Dr., D-55442 Stromberg (DE); Hochhaus, Roland, D-55126 Mainz (DE); Kersten, Ralf, Prof.Dr., D-65817 Bremthal (DE); Krause, Dieter, Prof.Dr., D-55126 Mainz (DE); Otto, Jürgen, Dr., D-55128 Mainz (DE); Paquet, Volker, D-55126 Mainz (DE); Segner, Johannes, Dr., D-55442 Stromberg (DE); Fattinger, Christof, Dr., CH-4249 Blauen (CH)
(74) Vertreter: Blumbach - Zinngrebe

(56) Entgegenhaltungen:
- EP-A- 0 194 639
- US-A- 5 026 135
- 2nd European conference on integrated optics, 17-18 oct. 1983, p. 108-111 K. Tiefenthaler et al.: nique for fabricating IO components in

## Beschreibung

Die Erfindung betrifft einen optischen Wellenleiter mit einem im wesentlichen planaren Substrat und einer auf dem Substrat aufgebrachten anorganischen wellenleitenden Schicht. Die Erfindung bezieht sich auch auf die Verwendung solcher Wellenleiter.

Das Aufbringen von Beschichtungen auf verschiedenartige Substrate ist an sich bekannt, wobei je nach Einsatzzweck und Verwendungsweise der beschichteten Substrate sehr unterschiedliche Anforderungen an die optische Qualität der Beschichtungen gestellt werden müssen.

Aus der DE-OS 38 33 501 ist ein Verfahren zum Aufbringen vielschichtiger optischer Interferenzschichten auf Substrate mit komplexer Oberflächenform bekannt. So werden auf ein Polymersubstrat mehrere hundert Schichten durch plasmaunterstützte, chemische Dampfabscheidung aufgebracht, wobei für die Beschichtung metallorganische Verbindungen eingesetzt werden. Das Beschichtungsverfahren liefert Interferenzschichten aus einem Material mit relativ hohem organischem Anteil, wodurch eine hohe Flexibilität bei der Materialauswahl für die Beschichtung gewährleistet ist. Die Qualität der Beschichtung, insbesondere bezüglich der Mikrostruktur, ist bei dem verwendungszweck derartiger mit mehreren Interferenzschichten versehener Substrate, wie z.B. bei Helmvisieren für ftubschrauberpiloten, nicht von ausschlaggebender Bedeutung. Es wird zwar erwähnt, daß die Beschichtung nicht die üblicherweise vorhandene Mikrosäulenstruktur aufweist, wobei dies allerdings nur für Beschichtungen von Glassubstraten gezeigt wird. Außerdem ist das Fehlen einer Mikrosäulenstruktur vermutlich auf den relativ hohen organischen Anteil der Beschichtung zurückzuführen. Ein Hinweis auf die Herstellung von optischen Wellenleitern mit im wesentlichen planaren Substraten wird in der DE-OS 38 33 501 nicht gegeben.

Auch die DE-O5 40 08 405.1 gibt keinen Hinweis auf optische Wellenleiter mit im wesentlichen planaren Substraten. Zwar wird die Beschichtung von Kunststoffsubstraten mit Interferenzschichten zur Ausbildung von Reflektoren erwähnt, es wird aber ausdrücklich darauf hingewiesen, daß Kunststoffsubstrate wegen ihrer geringen thermischen Belastbarkeit weniger gut geeignet sind als anorganische Substrate, wie z.B. Glassubstrate.

Im Gegensatz zu Reflektoren oder allgemein mit Interferenzschichten versehenen Substraten sind die Anforderungen an optische Wellenleiter, die z.B. als optische Transducer in Oberflächensensoren, wie z. B. Biosensoren eingesetzt werden, weitaus höher. Insbesondere werden optische Wellenleiter angestrebt, die eine möglichst geringe Dämpfung und eine hohe Brechzahl aufweisen. Solche Wellenleiter sind an sich bekannt, wobei allerdings jeweils Glassubstrate Verwendung finden, die mit anorganischen oder organischen Beschichtungen versehen sind. Die geringe Dämpfung dieser bekannten Wellenleiter wird dadurch ermöglicht, daß das anorganische Substrat wie z. B. Glas auf eine hohe Temperatur aufgeheizt werden kann, so daß die Ausbildung einer Mikrosäulenstruktur weitgehend verhindert wird.

Aus Kunz et al in Eurosensors IV, 1990, Karlsruhe, ist ein optischer planarer Wellenleiter bekannt, der mit reaktivem Ion-Plating aus Ta₂O₅ hergestellt ist und eine Brechzahl von 2,2 bei einem Verlust von 1,1 dB/cm für die TEO-Mode und 1,3 dB/cm für die TM0-Mode aufweist.

Es wird der Einfluß des Substratmaterials auf die Verluste bei einer Wellenlänge von 633 nm beschrieben, wobei Schichten auf Quarzglas die geringsten Verluste besitzen. Bei Verwendung dieses Substrates sind bei niedrigem Bogenstrom die Verluste gering ( < 4 dB/cm), die Schicht hat jedoch eine ausgeprägte Säulenstruktur, die sie abhängig gegenüber Umweltbedingungen macht. Um dichte Schichten zu erhalten, muß der Bogenstrom groß gemacht werden, was jedoch mit dem Nachteil verbunden ist, daß die Verluste ansteigen.

Aus Lam, D.K.W., Appl. Opt. 23/1984/2744 ist die Herstellung eines SiOₓN_{y}-Wellenleiters bei einer Substrattemperatur von 220°C auf Quarzglas oder Silizium bekannt. Geringe Verluste von SiOₓN_{y} werden nur für eine Brechzahl von etwa 1,75 erhalten und zwar nach einem zusätzlichen-Prozeßschritt, der nur für anorganische Substrate verträglich ist. Hierbei handelt es sich um eine zusätzliche CO₂-Laserbehandlung, bei der der Verlust von 5 dB/cm auf 1,5 dB/cm vermindert wird.

Aus Lukosz, W. et al, Sensors and Actuators, BI (1990) 585-5B8 und 592-596 sind Anwendungsmöglichkeiten eines mit Sol-Gel-Technik hergestellten etwa 170 nm dicken Wellenleiters aus einer SiO₂-TiO₂-Mischschicht auf Glas mit einer Brechzahl von 1,74 - 1,80 bekannt. Die Gelschicht ist prägbar, so daß ein Gitter aufgebracht werden kann. Allerdings muß nach dem Prägen die Gelschicht ausgehärtet werden mit dem Nachteil, daß die Gelschicht schrumpft und somit ihre optischen Eigenschaften verändert werden. Reine TiO₂-Schichten mit hoher Brechzahl können nicht hergestellt werden, weil zum Aushärten so hohe Temperaturen eingesetzt werden müssen, daß die Schichten kristallin werden.

In Heuberger et al, Appl. Opt. 25/1986/1499 werden Wellenleiter beschrieben, die ebenfalls mit der Sol-Gel-Technik hergestellt werden. Die aufgebrachte SiO₂-TiO₂₋Mischschicht auf Pyrex-Glas hat einen Verlust von < 1 dB/cm, muß aber ebenfalls bei hohen Temperaturen (500°C) ausgehärtet werden.

In allen veröffentlichungen, die sich mit optischen Wellenleitern befassen, wird die Herstellung von SiOₓN_{y}-, Ta₂O₅- oder SiO₂-TiO₂-Schichten jeweils auf anorganischen Substraten beschrieben, wobei entweder hohe Substrattemperaturen eingesetzt werden müssen oder eine Zusatzbehandlung vorgenommen werden muß.

Ein weiterer Nachteil der bekannten Wellenleiter ist, daß ihre Substrate selbst nicht prägbar sind, was aber beispielsweise erforderlich ist, um kostengünstig ein optisches Gitter für die Einkopplung bzw. Auskopplung von Licht in die wellenleitende Schicht anzubringen. Darüber hinaus sind die bekannten optischen Wellenleiter zerbrechlich und nicht durch Schneiden oder Stanzen verarbeitbar.

Aus der US-PS 4,749,245 ist ein optischer Wellenleiter auf einem planaren Substrat bekannt, der eine organische wellenleitende Schicht und ein Substrat aus Kunststoff aufweist. Zwischen Substrat und wellenleitender Schicht ist mindestens eine Zwischenschicht aus einem weiteren organischen hochmolekularen Material erforderlich, deren Löslichkeit von der des wellenleitenden organischen Materials verschieden ist und deren Brechzahl niedriger ist. Ein Nachteil dieses Wellenleiters ist, daß für die wellenleitende Schicht nur ein begrenzter Brechzahlbereich zur Verfügung steht (maximal bis 1,7) und daß die wellenleitende Schicht, da Kunststoffe in der Regel Feuchtigkeit aufnehmen, bei sich verändernden Umweltbedingungen (Feuchtigkeit, Temperatur) nicht brechzahlstabil ist. Wellenleiter der beschriebenen Art sind daher für die Oberflächensensorik ungeeignet (s. z.B. R. Reuter et al. APL 52, p 778 (1988)).

Aus der EP-A-420 173 ist es ferner bekannt, einen Gitterkoppler mit Wellenleiter herzustellen, wobei zunächst eine Schicht mit eingeformtem Gitter aus einem UV-härtbaren Kunstharz auf einem SiO₂-Substrat aufgebracht und auf dieser Schicht eine anorganische wellenleitende Schicht aus ZnO oder ZnS abgeschieden wird. Auch hier wird demgemäß ein anorganisches Substrat zur Herstellung einer optischen Komponente verwendet.

Aufgabe der Erfindung ist es, einen hochbrechenden optischen Wellenleiter mit einem im wesentlichen planaren Substrat zu schaffen, der eine hohe Bruchfestigkeit besitzt und dessen Substrat für die wirtschaftliche Herstellung optischer Mikrostrukturen geeignet ist, und eine einfache und wirtschaftliche Weiterverarbeitung des Wellenleiters zu Fertigprodukten erlaubt.

Diese Aufgabe wird mit einem optischen Wellenleiter gemäß Anspruch 1 gelöst. Bevorzugte Verwendungen sind in den Ansprüchen 42 bis 44 beschrieben. Vorteilhafte Ausgestaltungen sind Gegenstand der Unteransprüche.

Unter hohem organischen Anteil gemäß Anspruch 1 wird ein Verhältnis der Anzahl Kohlenwasserstoff-Gruppen zu Metallatomen des Oxids von größer 0,1 verstanden.

Der erfindungsgemäße optische Wellenleiter mit anorganischer wellenleitender Schicht auf einem Kunststoffsubstrat bietet den Vorteil, daß die hohe Brechzahl der anorganischen Schicht mit den Materialeigenschaften des Kunststoffsubstrates, wie z. B. Bruchfestigkeit und geringes Gewicht sowie wirtschaftlich günstiger Strukturierbarkeit kombiniert sind. Die Schichtdicke, die zur Führung einer bestimmten Zahl von Moden erforderlich ist, wird um so kleiner, je größer die Brechzahl des Wellenleiters ist. Monomodewellenleiter mit hoher Brechzahl der anorganischen wellenleitenden Schicht, die nur die TE₀- und TM₀-Mode führen, sind insbesondere bei Verwendung des Wellenleiters in der Sensorik (insbesondere Oberflächensensorik) von Bedeutung, da die Empfindlichkeit des Sensors mit der Brechzahl ansteigt.

Zusätzliche Vorteile von anorganischen Wellenleiterschichten auf Kunststoffsubstraten bestehen darin, daß das Kunststoffsubstrat als Folie ausgebildet werden kann. Folien mit Dicken von > 20 µm werden problemlos mit wellenleitenden Schichten belegt, ohne daß damit eine untere Grenze gegeben wäre. Das Material Kunststoffolie bietet den Vorteil, daß Wellenleiter in großen Stückzahlen kostengünstig hergestellt und als Massenprodukt einer breiten Anwendung zugänglich gemacht werden können. Die Materialeigenschaften der Kunststoffolie vereinfachen die nachfolgende Verarbeitung des Wellenleiters zu Fertigprodukten erheblich.

Vorzugsweise kommen thermoplastisch verarbeitbare Kunststoffe, insbesondere thermoplastisch verarbeitbares Polycarbonat, PMMA, Polyimic oder Polyester als Substratmaterial in Frage.

Thermoplaste haben den Vorteil, daß auf ihrer Oberfläche durch Heißprägen optische Beugungsgitter zum Ein- und Auskoppeln der geführten Welle ohne großen Fertigungsaufwand erzeugt werden können.

Polycarbonate werden bevorzugt, da hier Folien mit guter Oberflächenqualität, d.h. relativ niedriger Ober-f-lächenrauhigkeit verfügbar sind. Darüber hinaus ist das Heißprägen von optischen Gittern in Polycarbonat bereits experimentell erprobt- Auch ist Polycarbonat als Substrat für organische wellenleitende Schichten bekannt. Allerdings haben Polycarbonat-Substrate den Nachteil, daß sie sehr kratzempfindlich sind. Polycarbonate besitzen eine gute Temperaturstabilität, die maximale Dauergebrauchstemperatur liegt bei etwa 135°C.

PMMA ist sehr kratzfest, weist ein nur geringes Wasseraufnahmevermögen auf, ist aber nicht so temperaturstabil wie Polycarbonat. Die maximale Dauergebrauchstemperatur von PMMA liegt bei nur 60-90°C, wodurch die Beschichtungstemperatur für den Wellenleiter stark eingeschränkt wird. Im allgemeinen werden mit höheren Substrattemperaturen bei der Herstellung der anorganischen wellenleitenden Schicht höhere Brechzahlen erreicht. Dagegen ist PMMA wie Polycarbonat gut prägbar und darüber hinaus auch photostrukturierbar.

Polyimidsubstrate haben den Vorteil, daß aufgrund der vergleichsweise geringen thermischen Ausdehnung dieses Kunststoffs Spannungen zwischen Substrat und anorganischer Beschichtung kleiner sind als bei anderen Kunststoffen. Darüber hinaus können auch Polyimid-Substrate mittels Heißprägung oder Photostrukturierung mit optischen Beugungsgittern versehen werden. Die Dauergebrauchstemperatur von Polyimid liegt mit über 200°C noch deutlich höher als die des Polycarbonat. Bei Polyimidsubstraten sind daher hohe Beschichtungstemperaturen und damit Wellenleiter mit hohen Brechzahlen möglich.

Anorganische Schichten haften sehr gut auf Polyestersubstraten. Polyestersubstrate sind darüber hinaus ebenfalls sehr temperaturstabil (Dauergebrauchstemperaturen von 100 bis 120°C, kurzzeitig sogar bis 200°C) und gut prägbar.

Weitere geeignete Kunststoffe sind u.a. PVC (Dauergebrauchstemperatur 65-85°C und Polystyrol (Dauergebrauchstemperatur 50-70°C) für die ebenfalls die Heißprägetechnik bekannt ist, sowie CR 39, Polyurethan oder ein Polymerisat aus Diethylenglykol-bis-allylcarbonat.

Bevorzugt werden Kunststoffolien als Substratmaterial verwendet. Kunststoffolien eingesetzt als Endlosband können in einem kontinuierlichen Rollprägeverfahren mit optischen Gittern versehen werden. Eine alternative Methode für die Gitterherstellung auf der Substratoberfläche ist das Prägen von Kunststoffplatten mit einem planaren Stempel. Aus der mit dem Wellenleiter beschichteten Kunststoffolie oder -platte sind einzelne Sensorchips leicht ausstanzbar ( z.B. für die Verwendung als optische. Transducer in der Sensorik).

Anstelle eines rein organischen Substrates können auch Substrate mit hohem organischen Anteil eingesetzt werden. Hierzu eignen sich die sogenannten ORMOCER-Materialien. ORganically MOdified CERamics - z.B. Greuer, K. und Schother, G. ORMOCERe: "Eine neue Werkstoffklasse, Erste Produktentwicklung", FhG-Berichte 2 (1990). Sowohl diese ORMOCER-Materialien als auch aus der Flüssigkeitsphase hergestellte Kunststoffschichten, z.B. aus nichtthermoplastischen Polyimiden, sind im nicht ausgehärteten Zustand prägbar, so daß ein Einkoppelgitter bzw. Auskoppelgitter ohne großen Fertigungsaufwand ausgebildet werden kann.

Der erfindungsgemäße Wellenleiter weist ein im wesentlichen planares Substrat auf. "Im wesentlichen planar" im Sinne dieser Erfindung bedeutet, daß das Substrat durchaus geringfügig uneben, d. h. z. B. leicht gewölbt, sein kann.

Vorzugsweise besteht die anorganische wellenleitende Schicht aus TiO₂, aus einer TiO₂-SiO₂-Mischung, aus ZnO, Nb₂O₅, Si₃N₄, Ta₂O₅, HfO₂ oder ZrO₂. Die Verwendung dieser Materialien zur Herstellung hochbrechender wellenleitender Schichten ist bekannt. Insbesondere können herkömmliche Beschichtungsverfahren wie z.B. das PCVD, PICVD oder ionenunterstützte PVD-Verfahren eingesetzt werden. Besonders bevorzugt sind Wellenleiterschichten aus SiO₂, TiO₂ oder Si₃N₄, da diese Beschichtungen in einfacher Weise mittels eines PCVD- oder PICVD-Verfahrens hergestellt werden können und die Ausgangsstoffe für diese Materialien sehr preiswert sind.

Die Dämpfung des erfindungsgemäßen optischen Wellenleiters liegt typischerweise unterhalb von 10 dB/cm. Vorzugsweise ist die Dämpfung < 5 dB/cm, insbesondere kleiner 3 dB/cm.

Diese Werte ergeben sich aus der Forderung, daß die Propagationsstrecke der geführten Welle im Wellenleiter für Anwendungen des Wellenleiters als optischer Transducer in der Oberflächensensorik relativ kurz bemessen ist, sie ist typischerweise kleiner als 1 cm.

Für das Ein- und Auskoppeln von kohärentem Licht in bzw. aus dem Schichtwellenleiter ist es bekannt, eines oder mehrere sog. optische Beugungsgitter zu verwenden. Das optische Beugungsgitter kann sich sowohl über begrenzte Regionen des Trägersubstrats als auch vollflächig über die gesamte Substratoberfläche erstrecken. Die vollflächige Ausbildung des Beugungsgitters hat den Vorteil, daß eine aufwendige Justage bei der Aus- bzw. Einkopplung des Lichts entfällt.

Gitterstrukturen für diese Anwendung liegen vorzugsweise im Bereich von 1000 bis 5000 l/mm mit Strukturtiefen von 1 bis etwa 50 nm, stärker bevorzugt 2 bis 20 nm.

Das optische Beugungsgitter kann sowohl als Mikro-Reliefgitter als auch als Brechzahlgitter, d.h. als kontinuierliche Schicht mit einer sich periodisch ändernden Brechzahl, ausgebildet sein.

Insbesondere bei Verwendung eines erfindungsgemäßen Wellenleiters als optischer Transducer für einen Oberflächensensor, insbesondere Biosensor, ist es vorteilhaft, das optische Beugungsgitter als multidiffraktives, insbesondere bidiffraktives Gitter auszubilden. Bidiffraktive Gitter als Ein- und Auskoppler für optische Wellenleiter sind bekannt und in der EP-A 455 067 beschrieben. Als "bidiffraktiv" wird eine Gitterstruktur bezeichnet, deren Frequenzspektrum zwei (multidiffraktives Gitter: mehrere) Fundamentalkomponenten aufweist. Ein bidiffraktives Gitter bewirkt eine Richtungsseparation zwischen ausgekoppeltem Licht und reflektierten, transmittierten, respektive direkt abgebeugten Teilstrahlen. Dies ermöglicht es, in der wellenleitenden Schicht geführtes Licht nach der Auskopplung hintergrundfrei zu detektieren, obwohl die Regionen auf der wellenleitenden Schicht, in denen das Ein- und Auskoppeln der geführten Lichtwelle erfolgt, teilweise überlappen.

Die bidiffraktive Gitterstruktur wird durch Uberlagerung von zwei Gittern mit unterschiedlicher Periodizität und/oder Orientierung realisiert. Einzelheiten über die Herstellung und weitere Vorteile des "bidiffraktiven Gitterkopplers" sind in der EP-A 455 067 beschrieben.

In einer weiteren bevorzugten Ausführungsform der Erfindung ist vorgesehen, zwischen dem Substrat und der wellenleitenden Schicht wenigstens eine Zwischenschicht anzuordnen.

Die Zwischenschicht dient u.a. der Verbesserung der Substratoberfläche bzgl. ihrer Rauhigkeit. Kommerziell erhältliche thermoplastische Kunststoffplatten oder -folien besitzen aufgrund ihres Herstellprozesses eine für die Anwendung zu hohe Oberflächenrauhigkeit (typischerweise 3-10 nm, RMS-Wert). Diese bewirkt starke Streuverluste der geführten Moden. Die Oberflächenrauhigkeit des Substrates geht in die Dämpfung quadratisch ein. Rauhigkeiten <3 nm, bevorzugt < 1,5 nm sind aber notwendig, um rauhigkeitsinduzierte Streuverluste in hochbrechenden, monomodigen Wellenleitern, wie sie z.B. für die Anwendung als optische Transducer in Oberflächensensoren, insbesondere Biosensoren, bevorzugt werden, zu minimieren. Die Zwischenschicht weist bevorzugt eine Oberflächenrauhigkeit < 3 nm, stärker bevorzugt < 1,5 nm auf.

Vorteilhafterweise bildet die Zwischenschicht, bei in die Substratoberfläche eingeprägtem optischen Beugungsgitter die Gitterstruktur nicht im Verhältnis 1:1 auf ihrer Oberfläche ab, sondern verkleinert deren Modulationstiefe, wodurch eine definierte Abschwächung des Beugungswirkungsgrades und der Ein- und Auskoppeleffizienz der Gitterstruktur erzielt wird. Dies hat insbesondere bei der Heißprägung des optischen Gitters herstellungstechnische Vorteile.

Beim Heißprägen einer Kunststoffplatte oder Folie wird üblicherweise von einem Master durch Elektroplattieren ein Metallstempel hergestellt. Die Kunststoffplatte oder -folie wird auf eine Temperatur von mindestens der Glastemperatur des Kunststoffes erhitzt und mit moderatem Druck gegen den Metallstempel gedrückt. Das Verfahren kann auch vollkontinuierlich in einer Rollprägung durchgeführt werden, wobei durch Elektroplattieren ein Metall-shim gefertigt wird, der auf eine heizbare Walze aufgespannt wird.

Die Folie wird dann auf eine Temperatur oberhalb ihres T₉ erhitzt und unter Druck durch zwei Walzen gezogen, wobei eine mit dem strukturierten Metall-shim bespannt ist. Rollprägungen auf Breiten von 300 mm und mehr gehören zum Stand der Technik. Die für die üblichen Anwendungen, wie z.B. die Herstellung von holographischen Sicherheitselementen oder die Herstellung von sog. Prismenfolien für Geschenkverpackungen, verwendeten Strukturtiefen liegen im Bereich von etwa 100 nm und darüber. Für die Ein- bzw. Auskopplung von Licht werden aber Gitter mit deutlich geringeren Strukturtiefen (< 50 nm) benötigt, wodurch höhere Anforderungen an die Herstellung eines Masters gestellt werden müssen. Die Strukturtiefentoleranz sollte hier maximal ± 20 %, vorzugsweise nur ± 5 % betragen. Das Auftragen einer Zwischenschicht, welche die Gittertiefe um ein gewünschtes Maß vermindert, hat nun den Vorteil, daß auch zur Herstellung feiner optischer Beugungsgitter Metallshims mit üblichen Strukturfiefen (um die 100 nm) und damit größerer Strukturtiefentoleranz Verwendung finden können.

Die Furchen des Gitters werden im Anschluß an den Prägeprozeß mittels der Zwischenschicht in einfacher Weise so weit aufgefüllt, bis eine gewünschte Beugungs- bzw. Ein- und Auskoppeleffizienz des Gitters erreicht wird. Bei Verwendung von Metallshims mit Strukturtiefen um die 100 nm wird es hierzu in der Regel ausreichen, daß die Dicke der Zwischenschicht wenigstens das 0,1-fache und höchstens das 50-fache der Tiefe der geprägten Gitterstruktur beträgt.

Es ist des weiteren bekannt, daß die Qualität von Prägeshims im Laufe der Zeit insbesondere durch Abrieb vermindert wird. Dies führt zu einer größeren Rauhigkeit der geprägten Substratoberfläche und damit zu einer Zunahme der Dämpfung in der wellenleitenden Schicht. Das Aufbringen einer Zwischenschicht hat hier den weiteren Vorteil, daß nicht nur die Oberflächenrauhigkeiten, die durch abgenutzte Prägeshims entstehen, wieder geglättet werden können, über die Dicke der Zwischenschicht kann auch die Strukturtiefe des geprägten Gitters und damit die Beugungs- und Ein- und Auskoppeleffizienz des Gitters in einfacher Weise nachreguliertwwerden. Diese verminderten Anforderungen an die Qualität der Prägeshims machen sich in geringeren Herstellungskosten eines Wellenleiters nach der Erfindung bemerkbar.

Mit zunehmender Dicke der Zwischenschicht wird die Substratoberfläche immer weiter aus dem Bereich des quergedämpften Feldes der Welle herausgeführt. Dadurch, daß die geführte Welle bei ausreichender Dicke der Zwischenschicht nur noch in ihrem Randbereich mit der Substratoberfläche in Wechselwirkung tritt, werden Streu- und Absorptionsverluste minimiert.

Die Zwischenschicht kann als einzelne Schicht ausgebildet sein, sich aber auch aus einem Schichtenpaket zusammensetzen, wobei dann die Bezeichnung "Dicke der Zwischenschicht" im Sinne dieser Erfindung als Dicke des gesamten Schichtenpakets zu verstehen ist. Wegen der einfacheren Herstellung und um die Kosten gering zu halten, wird die Ausbildung der Zwischenschicht als Einzelschicht bevorzugt.

Als Zwischenschicht ist eine solche geeignet, die niedrigbrechend und absorptionsarm ist sowie eine glasige, d.h. nichtkristalline Struktur aufweist. Es kann sich sowohl um eine Schicht aus einem organischen Material als auch um eine Schicht aus einem anorganischen Material handeln. Auch können Kompositmaterialien aus anorganischen und organischen Komponenten eingesetzt werden. Schichtpakete können aus anorganischen und/oder organischen Einzelschichten zusammengesetzt sein. Vorzugsweise wird für die Zwischenschicht ein Material verwendet, das sie als Unterlage für eine durch einen Vakuumprozeß, insbesondere PCVD, aufgebrachte wellenleitende Schicht brauchbar macht.

Als Materialien für die Zwischenschicht können beispielsweise verwendet werden: SiO₂, F- oder B-dotiertes SiO₂, Gradientenschichten aus SiOₓC_{y}H_{z}, bei denen der Kohlenwasserstoffanteil kontinuierlich von der Substratoberfläche her abnimmt, Al₂O₃, organisch modifizierte Keramikschichten (ORMOCERE), und UV-härtbare Lacke. In einer bevorzugten Ausführungsform besteht die Zwischenschicht aus einem organischen Material, da sich organische Materialien bei niedrigeren Temperaturen als anorganische verfestigen.

In einer weiteren bevorzugten Ausführungsform besteht die Zwischenschicht aus SiO₂. Dies hat den Vorteil, daß Zwischenschicht und wellenleitende Schicht gemeinsam in einem Vakuumprozeß aufgebracht werden können.

Vorteilhafterweise ist die Brechzahl des Materials für die Zwischenschicht kleiner oder gleich der des Substratmaterials, da die Sensitivität des Wellenleiters durch den Brechzahlunterschied zwischen wellenleitender Schicht und Unterlage bestimmt wird. Voraussetzung hierfür ist aber, daß die Unterlage optisch wirksam ist, d. h. eine Mindestdicke von etwa 50/µm aufweist. Bei Verwendung von TiO₂ für die wellenleitende Schicht sollte die Zwischenschicht aus einem Material mit einer Brechzahl zwischen 1,3 und 1,6 bestehen.

Es ist vorteilhaft, zwischen zwei chemisch inkompatiblen Schichten, beispielsweise dem organischen Substrat oder der organischen Zwischenschicht und der anorganischen wellenleitenden Schicht eine Haftvermittlungsschicht anzuordnen. Diese kann insbesondere aus einem Material bestehen, dessen thermischer Ausdehnungskoeffizient zwischen denen der zu verbindenden Materialien liegt, wodurch eine Angleichung der Schichten im thermischen Ausdehnungsverhalten und schon allein damit eine bessere Haftung der Schichten erreicht wird. Vorzugsweise werden als Haftvermittlungsschichten Gradientenschichten aus SiOₓC_{y}H_{z} eingesetzt, wobei auch hier, wie im Falle der Zwischenschicht, der Kohlenwasserstoffanteil kontinuierlich von der Grenzfläche zur organischen Schicht zur Grenzfläche zur anorganischen Schicht hin abnehmen sollte.

Darüber hinaus hat es sich insbesondere bei Anwendung eines PCVD-Verfahrens als vorteilhaft erwiesen, auf das organische Substrat bzw. allgemein auf eine Schicht aus organischem Material eine Schutzschicht aufzubringen, um die organische Schicht beim nachfolgenden Aufbringen der wellenleitenden Schicht vor nachteiligen Einflüssen zu schützen. Je nach organischem Material der Unterlagenschicht kann es von Vorteil sein, die Schutzschicht aus einem Material zu wählen, das gegen Angriff energetischer Partikel, wie zum Beispiel Ionen, Radikale, aus dem Plasma der Ausgangsstoffe für die wellenleitende Schicht, z. B. Cl-Atome, schützt. Für die Schutzschicht kommen SiO₂ oder SiOₓC_{y}H_{z}-Verbindungen in Frage. Bevorzugt besteht die Schutzschicht aus SiO₂. Eine Schichtdicke von wenigen nm, vorzugsweise zwischen 1 nm und 200 nm reicht aus. Diese Schutzschicht ist hochfest, absorptionsarm und so ausgelegt, daß sie bei der Wellenlänge des Lichtes, für die der Wellenleiter ausgelegt ist, nicht lichtstreuend ist- Bei Verwendung einer SiOₓC_{y}H_{z}-Verbindung dient die Schutzschicht zugleich als haftungsvermittelnde Schicht.

Vorzugsweise besteht die Zwischenschicht aus einem Material, das sie sowohl als Schutzschicht als auch als Haftvermittlungsschicht brauchbar macht.

Für verschiedene Anwendungen des Wellenleiters in der Sensorik und Analytik erweist es sich als vorteilhaft, die Oberfläche des Wellenleiters in definierten Bereichen oder vollflächig mit einer Deckschicht aus anorganischem oder organischem Material zu versehen. Die Deckschicht kann z. B. dazu dienen, eine Sensoroberfläche mit bestimmten chemischen oder physikalischen Eigenschaften bereitzustellen.

Oberflächen der Materialien SiO₂ und Polystyrol spielen in der Analytik eine wichtige Rolle- Deckschichten aus SiO₂ und Polystyrol sind für den Einsatz des erfindungsgemäßen Wellenleiters in der Oberflächensensorik geeignet.

Für diverse Anwendungen von Oberflächen in der Analytik (insbesondere der Affinitäts-Chromatographie) hat die Verwendung von porösen Materialien mit großer innerer Oberfläche, z. B. poröses SiO₂, entscheidende Bedeutung. Der erfindungsgemäße Wellenleiter, mit einer Deckschicht aus porösem SiO₂ versehen, besitzt ideale Materialeigenschaften für den Einsatz als optischer Sensor im Bereich der Analytik (insbesondere der Affinitäts-Chromatographie).

Die optisch-wellenleitende Schichtstruktur auf der Substratoberfläche läßt sich als planarer optischer Wellenleiter oder als sogenannter Streifenwellenleiter ausbilden. Streifenwellenleiter werden auch als Kanalwellenleiter oder Stegwellenleiter bezeichnet. Verschiedene Anwendungen von planaren Wellenleitern und Streifenwellenleitern in der optischen Sensorik sind in Kunz, Proc. SPIE vol. 1587 (1992) beschrieben.

Bei einem planaren optischen Wellenleiter ist die Ausbreitungsrichtung der geführten Lichtwelle entlang der Substratoberfläche frei wählbar. Die Ausbreitungsrichtung der geführten Lichtwelle läßt sich z. B. kontrollieren, durch geeignete Wahl von Gitterkonstante und Orientierung des Koppelgitters sowie durch geeignete Wahl der Richtung des einfallenden Lichtstrahls.

Im Falle des Steifenwellenleiters erfolgt die Wellenleitung entlang vordefinierter Spuren auf der Substratoberfläche. Die Ausbreitungsrichtung der geführten Lichtwelle in der Ebene der Substratoberfläche ist durch die streifenförmige Struktur des Wellenleiters definiert. Das Einkoppeln von Licht in einen Streifenwellenleiter erfolgt z. B. mit einem Koppelgitter. Dabei sind Gitterkonstante und Orientierung des Koppelgitters und die Richtung des einfallenden Lichtstrahls so zu wählen, daß die eingekoppelte Lichtwelle die vordefinierte Ausbreitungsrichtung der geführten Lichtwelle im Streifenwellenleiter aufweist.

Für die Herstellung von Streifenwellenleitern ist das optisch-wellenleitende Schichtpaket mit einer streifenförmigen, optischen Mikrostruktur zu versehen. Die Mikrostruktur kann sich auf der Substratoberfläche und/oder in einer Zwischenschicht zwischen Substrat und wellenleitender Schicht und/oder in der wellenleitenden Schicht und/oder in einer Deckschicht auf der wellenleitenden Schicht befinden. Die Mikrostrukturierung kann ein geeignetes Reliefprofil und/oder eine Brechzahlmodulation parallel zur Substratoberfläche umfassen.

In einer bevorzugten Ausführungsform der Erfindung ist die Herstellung der streifenförmigen Mikrostrukturen mit analogen Techniken vorgesehen, wie sie für die Herstellung von optischen Gitterstrukturen für das Ein- oder Auskoppeln beschrieben werden.

In einer anderen Ausführungsform der Erfindung erfolgt die Herstellung des Streifenwellenleiters durch Strukturierung einer Deckschicht auf der wellenleitenden Schicht. Herstellung und Wirkungsweise strukturierter Deckschichten für die Definition von Streifenwellenleitern sind in der Literatur beschrieben, siehe z. B. S. Valette et al., Sibased integrated optics technologies, Solid State Technology, Feb. 1989.

Sowohl planare optische Wellenleiter als auch Streifenwellenleiter finden als Transducer in der optischen Sensorik Verwendung (siehe Kunz et al., Proc. SPIE vol. 1587 (1992)).

Eine weitere wichtige Anwendung von planaren optischen Wellenleitern und Streifenwellenleitern im Bereich der Sensorik und Signalverarbeitung, ist deren Verwendung als passive Bestandteile in integriert-optischen Baugruppen insbesondere integriert-optischen Netzwerken.

Ein besonders geeignetes Verfahren zur Herstellung eines erfindungsgemäßen Wellenleiters ist dadurch gekennzeichnet, daß als Substrat ein Kunststoffsubstrat oder ein Substrat mit hohem organischen Anteil verwendet wird, daß das Substrat bei Kunststoffen auf T < Tg und bei Substraten mit hohem organischen Anteil auf T < 300°C aufgeheizt wird, wobei Tg die Glastemperatur des Kunststoffes ist, und daß auf das Substrat mittels eines PCVD-Verfahrens, vorzugsweise PICVD-Verfahrens, eine anorganische wellenleitende Schicht aufgebracht wird. Vorzugsweise wird das Plasma bei diesem Beschichtungsverfahren mittels Mikrowellen angeregt.

Es hat sich herausgestellt, daß bei diesem Verfahren Substrattemperaturen von ca. 60°C bereits ausreichen, um eine Schicht mit mikrosäulenfreier Struktur aufzubringen. Mit diesem Verfahren ist es möglich, eine hohe Packungsdichte von annähernd 1 zu erzielen, wobei die Schicht praktisch so beständig gegen Umwelteinflüsse wie das massive Schichtmaterial ist und praktisch die Brechzahl des massiven Schichtmaterials besitzt. Da nur eine geringe Substrattemperatur zur Ausbildung von verlustarmen anorganischen wellenleitenden Schichten erforderlich ist, konnten mit diesem Verfahren erstmals Kunststoffe oder Materialien mit hohem organischem Anteil als Substrate für optisch wellenleitende Schichten aus anorganischem Material Verwendung finden.

Beispielsweise ist im Parameterfeld der Beschichtung in einem Mikrowellenplasma die Elektronentemperatur, die nur wenige eV beträgt, und das Self-bias Potential zwischen Plasma und Substrat gering. Dies bietet den Vorteil, daß die Substratoberfläche und die anorganische Schicht nicht durch das Plasma strahlengeschädigt werden. Die wellenleitende Schicht wächst bei diesem Verfahren homogen ohne Säulenstruktur und mit hoher Packungsdichte auf.

Je nach Substratmaterial kann es von Vorteil sein, die Haftung des Wellenleiters durch Einsatz eines Verfahrens zur Erhöhung der Haftfestigkeit, das zum Stand der Technik gehört und z.B. in WO 89/01957 beschrieben ist, noch weiter zu verbessern. Auch dann bleibt die wellenleitende Eigenschaft bei geringen Verlusten erhalten.

Vorzugsweise wird das optische Beugungsgitter mittels eines Abformverfahrens, z.B. Heißprägens, direkt in die Oberfläche des organischen Substrats eingeprägt. Insbesondere ist eine kostengünstige Herstellung eines erfindungsgemäßen Wellenleiters dann zu erwarten, wenn eine Kunststoffolie als Substrat verwendet wird und die Strukturierung der Substratoberfläche in einem Foliendurchlauf geschehen kann. Hier hat sich insbesondere die Rollprägung von Kunststoffolien bewährt, da sie zusätzlich noch zu einer Glättung der Substratoberfläche führt.

Kunststoffolien besitzen aufgrund ihres Herstellungsprozesses häufig Riefen und weisen eine zu große Oberflächenrauhigkeit von meist mehr als 3 nm RMS auf. Vermutlich ist dies einer der Gründe, warum der Einsatz von Kunststoffolien als Substrat für wellenleitende Schichten nicht bekannt ist. Zwar ist es für einen Folienhersteller prinzipiell möglich, unter Verwendung besonders glatter Walzen ebenfalls Folien mit der geforderten Rauhigkeit herzustellen. Da der Bedarf an solch extrem glatten Folien jedoch gering ist und eine Sonderfertigung dieser Folien sehr kostspielig ist, empfiehlt sich eine andere Vorgehensweise.

Es hat sich gezeigt, daß die Anwendung des an sich bekannten Rollprägeverfahrens zur Herstellung von Gittern auf Kunststoffolien sich vorteilhaft auf die Herstellung qualitativ hochwertiger Substratoberflächen auswirkt. Es wurde überraschenderweise gefunden, daß für einen erfindungsgemäßen

Wellenleiter nicht nur die zum Ein- und Auskoppeln benötigten Gitter durch Rollprägung erhalten werden können, sondern auch eine glattere Oberfläche mit einer Rauhigkeit von < 1,5 nm (RMS) in einem für die Wellenleitung bestimmten Zwischenbereich, wenn entsprechend hochwertige Metallshims eingesetzt wurden.

Ein weiteres Verfahren zur Herstellung einer optischen Beugungsgitters ist die Photostrukturierung. Hierfür wird als Substrat ein photostrukturierbares Polymer, z.B. ein Photoresist auf der Basis von Polyimide, verwendet oder ein Kunststoff, dessen Brechzahl photochemisch veränderbar ist. Solche Kunststoffe sind beispielsweise in Driemele et al., Appl. Opt. 25, 2960 ff., Hornak et al., J. Appl. Phys., 67 (1990), und Beeson et al., Appl. Phys. Lett. 58 (1991), 1955 ff beschrieben.

Die Herstellung des optischen Beugungsgitters erfolgt dabei durch Belichten definierter Bereiche auf der Substratoberfläche, wodurch eine lokale, photochemische Veränderung des Substratmaterials induziert wird. Bei Verwendung von Photoresist folgt dem Belichten ein Entwicklungsschritt, welcher ein Mikro-Reliefgitter in der Substratoberfläche erzeugt. Bei Verwendung von Kunststoff mit photochemisch veränderbarer Brechzahl erzeugt die lokale Belichtung eine Brechzahlmodulation in einer Ebene parallel zur Substratoberfläche.

Ein weiteres Verfahren zur Herstellung eines optischen Beugungsgitters ist das Prägen eines Polymerfilms, welcher durch Belichten (insbesondere durch Belichten im UV) vernetzt und dabei aushärtet.

Es kann aber auch vorteilhaft sein, das optische Beugungsgitter nicht direkt auf der Substratoberfläche anzubringen, sondern hierfür eine eigene "Gitterschicht" vorzusehen. Diese Vorgehensweise bietet sich beispielsweise dann an, wenn das Beugungsgitter nicht als Reliefgitter auf der Substratoberfläche, sondern als Schicht mit sich periodisch ändernder Brechzahl ausgebildet werden soll. Das Beugungsgitter kann in einer solchen Schicht, die aus einem photorefraktiven Material bestehen kann, beispielsweise aus einem Polymer, dessen Brechzahl durch Belichtung geändert werden kann, in einfacher Weise, wie bereits oben beschrieben, mittels eines photolithographischen Prozesses erzeugt werden.

Ein weiteres Verfahren zur Herstellung eines optischen Beugungsgitters ist das Injection Molding, das z. B. in A. Neyer at al., Proceedings of Integrated Photonics Research, 1992, beschrieben ist.

Bei den aus der flüssigen Phase hergestellten Kunststoffschichten wie auch bei den ORMOCER-Schichten werden die optischen Beugungsgitter bzw, die optischen Mikrostrukturen (Streifenwellenleiter) vorzugsweise durch plastische Formung erzeugt. Dabei wird der aus der Flüssigkeitsphase aufgebrachte Film vorerst getrocknet. In diesem Zustand ist er noch durch Aufdrucken eines Stempels verformbar. Im verformten Zustand muß der Film dann gehärtet werden, z. B. durch UV- oder Wärmeeinwirkung. Die UV-Einwirkung kann bei Verwendung eines transparenten Stempels durch diesen hindurch erfolgen.

Die Zwischenschicht aus organischem Material wird bevorzugt in einem Tauch- oder Schleuderverfahren aufgebracht. Es hat sich gezeigt, daß bei Ausbildung der Zwischenschicht aus der flüssigen Phase die Oberflächenspannung der Flüssigkeit zu einer stärkeren Einebnung von Rauhigkeiten auf der Substratoberfläche sowie der Gitterstruktur führt. Allgemein eignen sich zur Herstellung der Zwischenschicht alle Verfahren, die kompakte, säulenstrukturfreie Schichten liefern, beispielsweise plasmagestütze CVD-Prozesse, insbesondere Mikrowellen-Plasma-Impuls-CVD, oder Ionensputtern u.a.. Für eine Zwischenschicht aus SiO₂ ist das PCVD-Verfahren bevorzugt, da dann Zwischenschicht und wellenleitende Schicht in einem Vakuumprozeß aufgebracht werden können.

Die Schutzschicht und die Haftvermittlungsschicht werden wie die wellenleitende Schicht vorzugsweise ebenfalls mit einem PCVD-, insbesondere einem PICVD-Verfahren, hergestellt.

Die Herstellung eines erfindungsgemäßen Wellenleiters kann sowohl in einem Foliendurchlaufverfahren als auch "batchweise" in einer PCVD-Anlage mit Gaswechselsystem, in welcher auf das mit einer Gitterstruktur versehene Substrat nacheinander Zwischenschicht, Haftvermittlungs- und Schutzschicht und wellenleitende Schicht aufgetragen werden, erfolgen. In einer vorteilhaften Verfahrensführung wird über die Schichtdicke der Zwischenschicht die Einstellung der Gittertiefe bewirkt. Dies kann durch Messung der Beugungseffizienz und/oder Ein- oder Auskoppeleffizienz der Gitterstruktur geschehen. Die Messung der Beugungseffizienz erfolgt hierbei vor der Beschichtung an dem mit der Gitterstruktur versehenen Substrat, die Messung der Ein- oder Auskoppeleffizienz während oder nach der Beschichtung mit der wellenleitenden Schicht. Dies erlaubt auch in einfacher Weise eine Überwachung der Verfahrensführung während der Beschichtung und eine Anpassung an sich während der Beschichtung ändernde Verhältnisse. Beispielsweise können Abnutzungerscheinungen des Prägeshims für die Rollprägung, die zu einer veränderten Strukturtiefe des Gitters führen, frühzeitig erkannt und bis zu einem gewissen Grad ohne Unterbrechung des Verfahrens durch Änderung der Dicke der Zwischenschicht ausgeglichen werden.

Je nach Substratmaterial kann es von Vorteil sein, dieses durch eine Schutzschicht gegen radikalischen Angriff aus dem Plasma der Ausgangs stoffe für die wellenleitende Schicht, z. B. C1-Atome, zu schützen. Dazu reicht eine Schichtdicke von wenigen nm aus.

Nachfolgend wird die Erfindung anhand der Ausführungsbeispiele näher erläutert:
Die Beschichtungen wurden in einer Mikrowellen-PICVD-Anlage durchgeführt, wie sie in Otto J. et al Proceedings SPIE Vol. 1323/1990/39 beschrieben ist. Es handelt sich hierbei um einen Parallelplattenreaktor mit Gasdusche. Die Reaktionsgase wurden durch die Gasdusche in den Reaktionsraum geleitet. Das Substrat lag auf einer für Mikrowellen (2,45 GHz) transparenten dielektrischen Grundplatte. Die Prozeßabgase wurden radial abgepumpt.

I. Herstellung eines Monomodewellenleiters aus TiO₂ auf einem Polycarbonat-Substrat, dessen Oberfläche durch Prägen in Teilbereichen strukturiert bzw. geglättet wurde. Als Struktur wurde ein Gitter mit einem Linienabstand von 364 nm und einer Modulationstiefe von 10 nm eingeprägt.

Prozeßparameter:
a) Plasmavorbehandlung

| | |
|---|---|
| Gas | : O₂ u/o N₂ u/o Ar |
| Dauer | : 5-300 s |
| Druck | : 0,8 mbar |
| Massenfluß | : 100 ml/min |
| Impulsdauer | : 1 ms |
| Impulspause | : 90 ms |

b) Beschichtung

| | |
|---|---|
| Druck | : 0,8 mbar |
| Massenfluß TiCI4 | : 4 ml/min |
| Massenfluß 02 | : 100 ml/min |
| Impulsdauer | : 1 ms |
| Impulspause | : 90 ms |
| Beschichtungsrate | : 40 nm/min |
| Schichtdicke | : 140 nm |
| Substrat | : Polycarbonat, 1,5 mm dick, 100 mm Durchmesser |
| Substrattemperatur | : 60°C |

Die Beschichtung erfolgte einmal mit und einmal ohne Aufbringen der Schutzschicht bzw. Verwendung eines Haftvermittlungsverfahrens nach dem Stand der Technik. In beiden Fällen lagen die Verluste für TEO-Wellen bei 2,5 dB/cm.

II. Herstellung eines Monomodewellenleiters aus TiO2 auf einem strukturierten Polycarbonat-Substrat wie Beispiel 1 mit einer 50 nm dicken Zwischenschicht aus SiO₂.

Prozeßparameter Zwischenschicht:

| | |
|---|---|
| Druck | : 0,8 mbar |
| Massenfluß HMDS | 10 mI/min |
| Massenfluß 02 | : 90 mI/min |
| Impulsdauer | : 0.8 ms |
| Impulspause | : 90 ms |
| Beschichtungsrate | : 150 nm/min |

(Plasmavorbehandlung, Aufbringen der wellenleitenden Schicht, Gitterstruktur analog zu Beispiel 1).

Durch das zusätzliche Aufbringen der Zwischenschicht erhöhte sich die Laufstrecke des geführten TMO-Modes in dem strukturierten Bereich von 0.5 mm (ohne Zwischenschicht) auf 5 mm.

Alle in obigen Beispielen durchgeführten Beschichtungen sind rißfrei, haftfest (nach MIL-M-13508-C) und überstehen eine mehrtägige Lagerung bei 45°C und 100% rel. Feuchte, sowie in Wasser bei 25°C. Beschichtete Polycarbonatfolien überstehen ebenfalls 30 Temperaturzyklen zwischen Raumtemperatur und 96°C unbeschadet, wobei die beschichtete Seite kontinuierlich mit destilliertem Wasser in Kontakt ist.

Beispielhafte Ausführungsformen der Erfindung werden nachfolgend anhand der Figuren näher erläutert.

Es zeigen:
Figur 1 einen Schnitt durch einen planaren optischen Wellenleiter,
Figur 2 einen Schnitt durch einen planaren optischen Wellenleiter mit einer Zwischenschicht,
Figur 3 einen Schnitt durch einen planaren Wellenleiter mit einer Deckschicht, und
Figur 4 einen Schnitt durch einen planaren optischen Wellenleiter gemäß einer weiteren Ausführungsform der Erfindung.

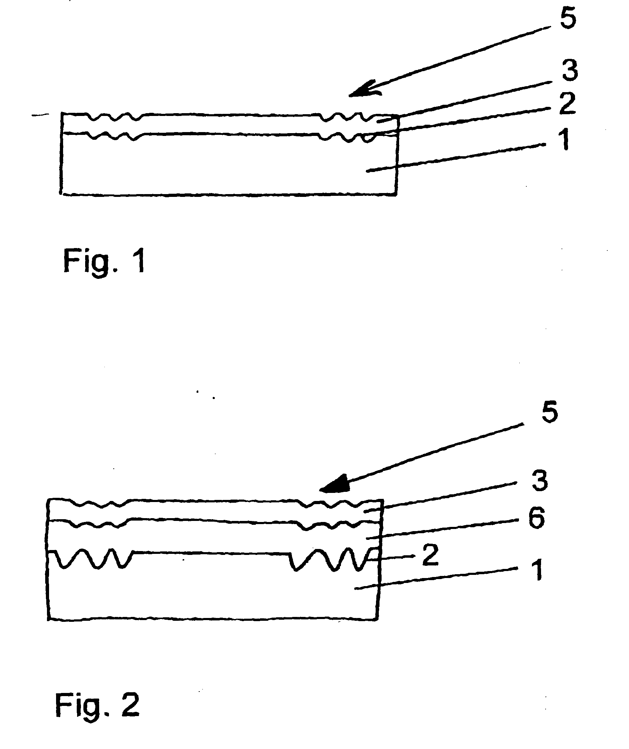

In Figur 1 ist ein Schnitt durch einen planaren optischen Wellenleiter 5 dargestellt, der ein Kunststoffsubstrat 1 aufweist. Auf der Substratoberfläche sind vor dem Aufbringen der wellenleitenden Schicht 3 an zwei beabstandeten Stellen Gitter 2 eingeprägt worden.

In Figur 2 ist eine Ausführungsform mit einer Zwischenschicht 6 dargestellt. Man erkennt, daß die Zwischenschicht zu einer Glättung des optischen Beugungsgitters und damit zu einer Verminderung der Strukturtiefe führt.

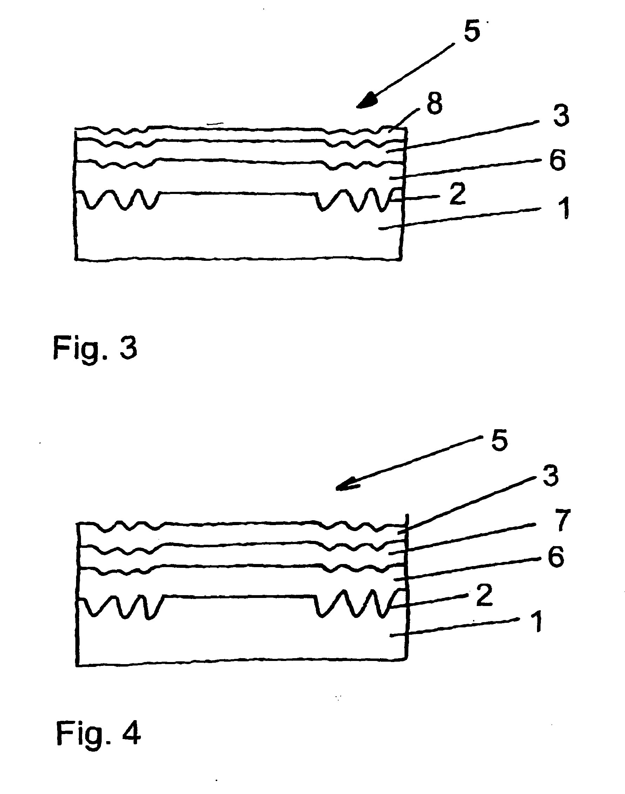

In Figur 3 ist der planare optische Wellenleiter 5 auf der wellenleitenden Schicht 3 zusätzlich mit einer Deckschicht 8 belegt.

In Figur 4 erkennt man, daß zwischen der Zwischenschicht 6, die aus einem organischen Material besteht, und der anorganischen wellenleitenden Schicht 3 eine Schutz- und Haftvermittlungsschicht 7 angeordnet ist.

## Patentansprüche

1. Optischer Wellenleiter mit einem im wesentlichen planaren Substrat und einer auf dem Substrat aufgebrachten anorganischen wellenleitenden Schicht,
**dadurch gekennzeichnet,**
**daß** das Substrat (1) aus Kunststoff oder aus Kunststoff mit einem Metalloxidanteil besteht, wobei das Verhältnis der Anzahl Kohlenwasserstoffgruppen zu den Metallatomen des Oxids größer als 0,1 ist.

2. Wellenleiter nach Anspruch 1, **dadurch gekennzeichnet, daß** der Kunststoff durch plastische oder thermoplastische Formung strukturierbar ist.

3. Wellenleiter nach Anspruch 1, **dadurch gekennzeichnet, daß** der Kunststoff photochemisch strukturierbar ist.

4. Wellenleiter nach Anspruch 1, **dadurch gekennzeichnet, daß** die optische Brechzahl des Kunststoffs photochemisch veränderbar ist.

5. Wellenleiter nach wenigstens einem der Ansprüche 1 bis 4, **dadurch gekennzeichnet, daß** der Kunststoff ein Polycarbonat, PMMA, ein Polyimid oder ein Polyester ist.

6. Wellenleiter nach wenigstens einem der Ansprüche 1 bis 5, **dadurch gekennzeichnet, daß** das Substrat (1) eine Kunststoffolie ist.

7. Wellenleiter nach wenigstens einem der Ansprüche 1 bis 6, **dadurch gekennzeichnet, daß** die Dicke des Substrats (1) zwischen 20 µm und 2 mm beträgt.

8. Wellenleiter nach Anspruch 7, **dadurch gekennzeichnet, daß** die Dicke des Substrats (1) < 500 µm beträgt.

9. Wellenleiter nach wenigstens einem der Ansprüche 1 bis 8, **dadurch gekennzeichnet, daß** die anorganische wellenleitende Schicht (3) aus TiO₂, aus einer TiO₂₋SiO₂-Mischung, aus ZnO, Nb₂O₅, Si₃N₄, Ta₂O₅, HfO₂ oder ZrO₂ besteht.

10. Wellenleiter nach wenigstens einem der Ansprüche 1 bis 9, **dadurch gekennzeichnet, daß** er eine Dämpfung von < 10 db/cm aufweist.

11. Wellenleiter nach Anspruch 10, **dadurch gekennzeichnet, daß** er eine Dämpfung von < 5 db/cm aufweist.

12. Wellenleiter nach Anspruch 11, **dadurch gekennzeichnet, daß** er eine Dämpfung von < 3 db/cm aufweist.

13. Wellenleiter nach wenigstens einem der Ansprüche 1 bis 12, **dadurch gekennzeichnet, daß** auf der substratoberfläche oder zwischen Substrat (1) und wellenleitender Schicht (3) wenigstens ein optisches Beugungsgitter (2) vorgesehen ist.

14. Wellenleiter nach Anspruch 13, **dadurch gekennzeichnet, daß** das optische Beugungsgitter (2) ein Mikro-Reliefgitter ist.

15. Wellenleiter nach Anspruch 14, **dadurch gekennzeichnet, daß** das optische Beugungsgitter (2) in die Oberfläche des Substrats (1) eingeprägt ist.

16. Wellenleiter nach Anspruch 13, **dadurch gekennzeichnet, daß** das optische Beugungsgitter (2) ein Brechzahlgitter ist.

17. Wellenleiter nach Anspruch 14 oder 16, **dadurch gekennzeichnet, daß** das optische Beugungsgitter (2) durch einen photochemischen Prozeß erzeugt wird.

18. Wellenleiter nach wenigstens einem der Ansprüche 13 bis 17, **dadurch gekennzeichnet, daß** das optische Beugungsgitter (2) ein multidiffraktives, insbesondere ein bidiffraktives Gitter ist.

19. Wellenleiter nach wenigstens einem der Ansprüche 13 bis 18, **dadurch gekennzeichnet, daß** das optische Beugungsgitter (2) vollflächig ausgebildet ist.

20. Wellenleiter nach wenigstens einem der Ansprüche 13 bis 19, **dadurch gekennzeichnet, daß** das optische Beugungsgitter (2) eine Liniendichte von 500 bis 5000 1/mm und eine Strukturtiefe von 1 bis 50 nm, vorzugsweise 2 bis 10 nm aufweist.

21. Wellenleiter nach wenigstens einem der Ansprüche 1 bis 20, **dadurch gekennzeichnet, daß** zwischen Substrat (1) und wellenleitender Schicht (3) wenigstens eine Zwischenschicht (6) vorgesehen ist.

22. Wellenleiter nach Anspruch 21, **dadurch gekennzeichnet, daß** die Zwischenschicht aus einem Material besteht, dessen Brechzahl kleiner oder gleich der Brechzahl des Substratmaterials ist.

23. Wellenleiter nach Anspruch 21 oder 22, **dadurch gekennzeichnet, daß** die Zwischenschicht(en) (6) eine Oberflächenrauhigkeit von < 3 nm, vorzugsweise < 1,5 nm aufweist(en).

24. Wellenleiter nach wenigstens einem der Ansprüche 21 bis 23, **dadurch gekennzeichnet, daß** durch die Zwischenschicht (6) die Modulationstiefe der Gitterstruktur (2) verringert wird.

25. Wellenleiter nach Anspruch 24, **dadurch gekennzeichnet, daß** die Dicke der Zwischenschicht(en) (6) so bemessen ist, daß ein gewünschter Beugungswirkungsgrad des optischen Beugungsgitters (2) eingestellt wird.

26. Wellenleiter nach Anspruch 25, **dadurch gekennzeichnet, daß** die Dicke der Zwischenschicht (6) wenigstens das 0,1-fache und höchstens das 50-fache der Tiefe der durch Prägung erzeugten Gitterstruktur (2) beträgt.

27. Wellenleiter nach wenigstens einem der Ansprüche 21 bis 26, **dadurch gekennzeichnet, daß** die Zwischenschicht (6) aus SiO₂ besteht.

28. Wellenleiter nach wenigstens einem der Ansprüche 21 bis 26, **dadurch gekennzeichnet, daß** die Zwischenschicht (6) aus einem organischen Material oder einem Material mit hohem organischen Anteil besteht.

29. Wellenleiter nach wenigstens einem der Ansprüche 21 bis 28, **dadurch gekennzeichnet, daß** zwischen einer organischen und einer anorganischen Schicht eine Haftvermittlungsschicht vorgesehen ist.

30. Wellenleiter nach Anspruch 29, **dadurch gekennzeichnet, daß** die Haftvermittlungsschicht aus SiOₓC_{y}H_{z} besteht.

31. Wellenleiter nach wenigstens einem der Ansprüche 1 bis 30, **dadurch gekennzeichnet, daß** zwischen wellenleitender Schicht (3) und organischer Unterlage eine Schutzschicht (7) vorgesehen ist, welche die Unterlage gegen Angriff von energetischen Partikeln aus dem Plasma der Ausgangsstoffe für die wellenleitende Schicht (3) schützt.

32. Wellenleiter nach Anspruch 31, **dadurch gekennzeichnet, daß** die Schutzschicht (7) aus SiO₂ besteht.

33. Wellenleiter nach wenigstens einem der Ansprüche 21 bis 32, **dadurch gekennzeichnet, daß** die Zwischenschicht (6) gleichzeitig Haftvermittlungs- und Schutzschicht (7) ist.

34. Wellenleiter nach wenigstens einem der Ansprüche 1 bis 33, **dadurch gekennzeichnet, daß** die Oberfläche des Wellenleiters mit einer Deckschicht (8) aus anorganischem oder organischem Material belegt ist.

35. Wellenleiter nach Anspruch 34, **dadurch gekennzeichnet, daß** die Deckschicht (8) aus SiO₂ besteht.

36. wellenleiter nach Anspruch 35 **dadurch gekennzeichnet, daß** das SiO₂ porös ist.

37. Wellenleiter nach Anspruch 34, **dadurch gekennzeichnet, daß** die Deckschicht (8) aus Kunststoff, insbesondere aus Polystyrol besteht.

38. Wellenleiter nach wenigstens einem der Ansprüche 1 bis 37, **dadurch gekennzeichnet, daß** die optisch wellenleitende Struktur auf der Substratoberfläche als planarer optischer Wellenleiter ausgebildet ist.

39. Wellenleiter nach wenigstens einem der Ansprüche 1 bis 37, **dadurch gekennzeichnet, daß** die optisch wellenleitende Struktur auf der Substratoberfläche als optischer Streifenwellenleiter ausgebildet ist.

40. Wellenleiter nach Anspruch 39, **dadurch gekennzeichnet, daß** die Wellenleitung entlang der Spuren durch eine Brechzahlmodulation oder ein Mikro-Reliefprofil in der Substratoberfläche und/oder in wenigstens einer Schicht zwischen Substrat (1) und wellenleitender Schicht (3) und/oder in der wellenleitenden Schicht (3) und/oder in der Deckschicht (8) definiert ist.

41. Wellenleiter nach wenigstens einem der Ansprüche 1 bis 40, **dadurch gekennzeichnet, daß** er ein Monomodewellenleiter ist.

42. Verwendung eines wellenleiters nach wenigstens einem der Ansprüche 1 bis 41 als optischer Transducer für einen Oberflächensensor, insbesondere einen Biosensor.

43. Verwendung eines Wellenleiters nach wenigstens einem der Ansprüche 1 bis 41 als Bestandteil einer optischen Meßeinrichtung.

44. Verwendung eines Wellenleiters nach wenigstens einem der Ansprüche 1 bis 41 als Bestandteil eines optischen Netzwerks.

## Claims

1. Optical waveguide with an essentially planar substrate and an anorganic waveguiding layer applied to the substrate,
**characterised in that**
the substrate (1) consists of plastic or plastic with a metal oxide portion wherein the ratio of the number of hydrocarbon groups to the metal atoms of the oxide is greater than 0.1.

2. Waveguide according to claim 1, **characterised in that** the plastic can be structured through plastic or thermoplastic shaping.

3. Waveguide according to claim 1, **characterised in that** the plastic can be photochemically structured.

4. Waveguide according to claim 1, **characterised in that** the optical refractive index of the plastic can be photochemically changed.

5. Waveguide according to at least one of the claims 1 to 4, **characterised in that** the plastic is a polycarbonate, PMMA, a polyimide or a polyester.

6. Waveguide according to at least one of the claims 1 to 5, **characterised in that** the substrate (1) is a plastic film.

7. Waveguide according to at least one of the claims 1 to 6, **characterised in that** the thickness of the substrate (1) is between 20 µm and 2 mm.

8. Waveguide according to claim 7, **characterised in that** the thickness of the substrate (1) is < 500 µm.

9. Waveguide according to at least one of the claims 1 to 8, **characterised in that** the anorganic waveguiding layer (3) consists of TiO₂, of a TiO₂-SiO₂ mixture, of ZnO, Nb₂O₅, Si₃N₄, Ta₂O₅, HfO₂ or ZrO₂.

10. Waveguide according to at least one of the claims 1 to 9, **characterised in that** it has a damping of < 10 db / cm.

11. Waveguide according to claim 10, **characterised in that** it has a damping of < 5 db / cm.

12. Waveguide according to claim 11, **characterised in that** it has a damping of < 3 db / cm.

13. Waveguide according to at least one of the claims 1 to 12, **characterised in that** at least one optical diffraction grating (2) is provided on the substrate surface or between the substrate (1) and the waveguiding layer (3).

14. Waveguide according to claim 13, **characterised in that** the optical diffraction grating (2) is a micro-relief grating.

15. Waveguide according to claim 14, **characterised in that** the optical diffraction grating (2) is shaped into the surface of the substrate (1).

16. Waveguide according to claim 13, **characterised in that** the optical diffraction grating (2) is a refractive index grating.

17. Waveguide according to claim 14 or 16, **characterised in that** the optical diffraction grating (2) is produced through a photochemical process.

18. Waveguide according to at least one of the claims 13 to 17, **characterised in that** the optical diffraction grating (2) is a multi-diffractive, in particular bi-diffractive, grating.

19. Waveguide according to at least one of the claims 13 to 18, **characterised in that** the optical diffraction grating (2) is formed over a full area.

20. Waveguide according to at least one of the claims 13 to 19, **characterised in that** the optical diffraction grating (2) has a line density of 500 to 5000 l/mm and a structure depth of 1 to 50 mm, preferably 2 to 10 mm.

21. Waveguide according to at least one of the claims 1 to 20, **characterised in that** at least one intermediate layer (6) is provided between the substrate (1) and the waveguiding layer (3).

22. Waveguide according to claim 21, **characterised in that** the intermediate layer consists of a material whose refractive index is less than or equal to the refractive index of the substrate material.

23. Waveguide according to claim 21 or 22, **characterised in that** the intermediate layer(s) (6) has / have a surface roughness of < 3 mm, preferably < 1.5 mm.

24. Waveguide according to at least one of the claims 21 to 23, **characterised in that** the modulation depth of the grating structure (2) is reduced through the intermediate layer (6).

25. Waveguide according to claim 24, **characterised in that** the thickness of the intermediate layer(s) (6) is measured in such a way that a desired diffraction efficiency of the optical diffraction grating (2) is put in place.

26. Waveguide according to claim 25, **characterised in that** the thickness of the intermediate layer (6) corresponds to at least 0.1 times and at most 50 times the depth of the grating structure (2) produced through shaping.

27. Waveguide according to at least one of the claims 21 to 26, **characterised in that** the intermediate layer (6) consists of SiO₂.

28. Waveguide according to at least one of the claims 21 to 26, **characterised in that** the intermediate layer (6) consists of an organic material or a material with a high organic portion.

29. Waveguide according to at least one of the claims 21 to 28, **characterised in that** an adhesive bonding layer is provided between an organic and an anorganic layer.

30. Waveguide according to claim 29, **characterised in that** the adhesive bonding layer consists of SiOₓCyH_{z}.

31. Waveguide according to at least one of the claims 1 to 30, **characterised in that** a protective layer (7) is provided between the waveguiding layer (3) and organic base, said protective layer (7) protecting the base against the effect of energetic particles from the plasma of the initial substances for the waveguiding layer (3).

32. Waveguide according to claim 31, **characterised in that** the protective layer (7) consists of SiO₂.

33. Waveguide according to at least one of the claims 21 to 32, **characterised in that** the intermediate layer (6) is at the same time an adhesive bonding and protective layer (7).

34. Waveguide according to at least one of the claims 1 to 33, **characterised in that** the surface of the waveguide is covered with a covering layer (8) made of anorganic or organic material.

35. Waveguide according to claim 34, **characterised in that** the covering layer (8) consists of SiO₂.

36. Waveguide according to claim 35, **characterised in that** the SiO₂ is porous.

37. Wavegide according to claim 34, **characterised in that** the covering layer (8) consists of plastic, in particular polystyrol.

38. Waveguide according to at least one of the claims 1 to 37, **characterised in that** the optically waveguiding structure is formed on the substrate surface as a planar optical waveguide.

39. Waveguide according to at least one of the claims 1 to 37, **characterised in that** the optically waveguiding structure is formed on the substrate surface as an optical strip waveguide.

40. Waveguide according to claim 39, **characterised in that** the waveguiding is defined along the tracks through a refractive index modulation or a micro-relief profile in the substrate surface and / or in at least one layer between the substrate (1) and waveguiding layer (3) and / or in the waveguiding layer (3) and / or in the covering layer (8).

41. Waveguide according to at least one of the claims 1 to 40, **characterised in that** it is a monomode waveguide.

42. Use of a waveguide according to at least one of the claims 1 to 41 as an optical transducer for a surface sensor, in particular a biosensor.

43. Use of a waveguide according to at least one of the claims 1 to 41 as a component of an optical measuring device.

44. Use of a waveguide according to at least one of the claims 1 to 41 as a component on an optical network.

## Revendications

1. Guide d'ondes optique comportant un substrat sensiblement planaire et une couche inorganique guidant les ondes appliquée sur le substrat, **caractérisé en ce que**
le substrat (1) est en matière plastique ou en matière plastique contenant une proportion d'oxyde métallique, le rapport entre le nombre de groupes d'hydrocarbures et les atomes métalliques de l'oxyde étant supérieur à 0,1.

2. Guide d'ondes selon la revendication 1, **caractérisé en ce que** la matière plastique peut être structurée par déformation plastique ou thermoplastique.

3. Guide d'ondes selon la revendication 1, **caractérisé en ce que** la matière plastique peut être structurée par voie photochimique.

4. Guide d'ondes selon la revendication 1, **caractérisé en ce que** l'indice de réfraction optique de la matière plastique peut être modifié par voie photochimique.

5. Guide d'ondes selon l'une au moins des revendications 1 à 4, **caractérisé en ce que** la matière plastique est un polycarbonate, un PMMA, un polyimide ou un polyester.

6. Guide d'ondes selon l'une au moins des revendications 1 à 5, **caractérisé en ce que** le substrat (1) est un film en matière plastique.

7. Guide d'ondes selon l'une au moins des revendications 1 à 6, **caractérisé en ce que** l'épaisseur du substrat (1) est comprise entre 20 µm et 2 mm.

8. Guide d'ondes selon la revendication 7, **caractérisé en ce que** l'épaisseur du substrat (1) est < 500 µm.

9. Guide d'ondes selon l'une au moins des revendications 1 à 8, **caractérisé en ce que** la couche inorganique (3) guidant les ondes est en TiO₂, en un mélange de TiO₂ et de SiO₂, en ZnO, Nb₂O₅, Si₃N₄, Ta₂O₅, HfO₂ ou en ZrO₂.

10. Guide d'ondes selon l'une au moins des revendications 1 à 9, **caractérisé en ce qu'**il possède une atténuation < 10 db/cm.

11. Guide d'ondes selon la revendication 10, **caractérisé en ce qu'**il possède une atténuation < 5 db/cm.

12. Guide d'ondes selon la revendication 11, **caractérisé en ce qu'**il possède une atténuation < 3 db/cm.

13. Guide d'ondes selon l'une au moins des revendications 1 à 12, **caractérisé en ce qu'**au moins un réseau de diffraction optique (2) est prévu sur la surface du substrat ou entre le substrat (1) et la couche (3) guidant les ondes.

14. Guide d'ondes selon la revendication 13, **caractérisé en ce que** le réseau de diffraction optique (2) est un réseau à microrelief.

15. Guide d'ondes selon la revendication 14, **caractérisé en ce que** le réseau de diffraction optique (2) est incrusté dans la surface du substrat (1).

16. Guide d'ondes selon la revendication 13, **caractérisé en ce que** le réseau de diffraction optique (2) est un réseau à indice de réfraction.

17. Guide d'ondes selon la revendication 14 ou 16, **caractérisé en ce que** le réseau de diffraction optique (2) est engendré par un processus photochimique.

18. Guide d'ondes selon l'une au moins des revendications 13 à 17, **caractérisé en ce que** le réseau de diffraction optique (2) est un réseau à multidiffraction, notamment un réseau à bidiffraction.

19. Guide d'ondes selon l'une au moins des revendications 13 à 18, **caractérisé en ce que** le réseau de diffraction optique (2) est agencé sur toute la surface.

20. Guide d'ondes selon l'une au moins des revendications 13 à 19, **caractérisé en ce que** le réseau de diffraction optique (2) possède une densité de lignes de 500 à 5000 1/mm, et une profondeur de structure de 1 à 50 nm, de préférence de 2 à 10 nm.

21. Guide d'ondes selon l'une au moins des revendications 1 à 20, **caractérisé en ce qu'**au moins une couche intermédiaire (6) est prévue entre le substrat (1) et la couche (3) guidant les ondes.

22. Guide d'ondes selon la revendication 21, **caractérisé en ce que** la couche intermédiaire est constituée d'un matériau dont l'indice de réfraction est inférieur ou égal à l'indice de réfraction du matériau du substrat.

23. Guide d'ondes selon la revendication 21 ou 22, **caractérisé en ce que** la rugosité de surface de la (des) couche(s) intermédiaire(s) (6) est < 3 nm, de préférence < 1,5 nm.

24. Guide d'ondes selon l'une au moins des revendications 21 à 23, **caractérisé en ce que** la profondeur de modulation de la structure de réseau (2) est réduite par la couche intermédiaire (6).

25. Guide d'ondes selon la revendication 24, **caractérisé en ce que** l'épaisseur de la (des) couche(s) intermédiaire(s) (6) est dimensionnée de telle sorte que le réseau de diffraction optique (2) est réglé à un indice d'effet de diffraction souhaité.

26. Guide d'ondes selon la revendication 25, **caractérisé en ce que** l'épaisseur de la couche intermédiaire (6) est d'au moins 0,1 fois, et au maximum 50 fois, égale à la profondeur de la structure de réseau (2) engendrée par incrustation.

27. Guide d'ondes selon l'une au moins des revendications 21 à 26, **caractérisé en ce que** la couche intermédiaire (6) est en SiO₂.

28. Guide d'ondes selon l'une au moins des revendications 21 à 26, **caractérisé en ce que** la couche intermédiaire (6) est constituée d'un matériau organique ou d'un matériau à proportion organique élevée.

29. Guide d'ondes selon l'une au moins des revendications 21 à 28, **caractérisé en ce qu'**une couche d'adhérence est prévue entre une couche organique et une couche inorganique.

30. Guide d'ondes selon la revendication 29, **caractérisé en ce que** la couche d'adhérence est en SiOₓC_{y}H_{z}.

31. Guide d'ondes selon l'une au moins des revendications 1 à 30, **caractérisé en ce qu'**une couche de protection (7) est prévue entre la couche (3) guidant les ondes et le support organique, qui protège le support contre une attaque de particules énergétiques provenant du plasma des matières de départ de la couche (3) guidant les ondes.

32. Guide d'ondes selon la revendication 31, **caractérisé en ce que** la couche de protection (7) est en SiO₂ .

33. Guide d'ondes selon l'une au moins des revendications 21 à 32, **caractérisé en ce que** la couche intermédiaire (6) fait simultanément office de couche d'adhérence et de protection (7).

34. Guide d'ondes selon l'une au moins des revendications 1 à 33, **caractérisé en ce que** la surface du guide d'ondes est dotée d'une couche de recouvrement (8) en un matériau inorganique ou organique.

35. Guide d'ondes selon la revendication 34, **caractérisé en ce que** la couche de recouvrement (8) est en SiO₂.

36. Guide d'ondes selon la revendication 35, **caractérisé en ce que** le SiO₂ est poreux.

37. Guide d'ondes selon la revendication 34, **caractérisé en ce que** la couche de recouvrement (8) est en matière plastique, notamment en polystyrène.

38. Guide d'ondes selon l'une au moins des revendications 1 à 37, **caractérisé en ce que** la structure optique guidant les ondes sur la surface du substrat est agencée en tant que guide d'ondes optique planaire.

39. Guide d'ondes selon l'une au moins des revendications 1 à 37, **caractérisé en ce que** la structure optique guidant les ondes sur la surface du substrat est agencée en tant que guide d'ondes optique à rubans.

40. Guide d'ondes selon la revendication 39, **caractérisé en ce que** le guidage d'ondes le long des pistes est défini par une modulation de l'indice de réfraction ou par un profil à microrelief dans la surface du substrat et/ou dans au moins une couche entre le substrat (1) et la couche (3) guidant les ondes et/ou dans la couche (3) guidant les ondes et/ou dans la couche de recouvrement (8).

41. Guide d'ondes selon l'une au moins des revendications 1 à 40, **caractérisé en ce qu'**il est un guide d'ondes monomode.

42. Utilisation d'un guide d'ondes selon l'une au moins des revendications 1 à 41 en tant que transducteur optique pour un détecteur de surface, notamment un biodétecteur.

43. Utilisation d'un guide d'ondes selon l'une au moins des revendications 1 à 41 en tant que composant d'un dispositif de mesure optique.

44. Utilisation d'un guide d'ondes selon l'une au moins des revendications 1 à 41 en tant que composant d'un réseau optique.
